# EUROPEAN PATENT APPLICATION

(11) **EP 1 310 464 A1**
(43) Date of publication of application: **14.05.2003**
(21) Application number: 01954459.2
(22) Date of filing: 06.08.2001
(51) Int. Cl.: C03C 3/087, C03C 3/085, C03C 3/083

(54) **GLASS SUBSTRATE FOR INORGANIC EL DISPLAY**

(30) Priority: 10.08.2000 JP 2000242061
(71) Applicant: NIPPON ELECTRIC GLASS COMPANY, Limited, Otsu-shi, Shiga 520-8639 (JP)
(72) Inventor: YAMAZAKI, Hiroki, Otsu-shi Shiga 520-8639 (JP); NAGAKANE, Tomohiro, Otsu-shi Shiga 520-8639 (JP)
(74) Representative: Tetzner, Michael, Dipl.-Ing.
(86) International application number: JP0106738
(87) International publication number: WO02014234

(57) **Abstract**

A glass substrate for an inorganic EL display comprises an aluminosilicate glass, contains CaO, SrO, BaO, and ZrO₂ the contents of which fall within ranges of, by mass percent, 0-13% CaO, 0-13% SrO, 0-13% BaO, 0-10% ZrO₂, and 0-13% CaO+SrO+BaO+ZrO₂, and has the strain point not lower than 520°C.

## Description

### Field of the Art

This invention relates to a glass substrate for an inorganic EL (electro luminescence) display.

### Background Art

An inorganic EL (electro luminescence) display has a number of advantages, such as a low profile, a light weight, sharpness of a displayed image, a high-definition picture being achieved because fine resolution of picture is easily obtained, full color images being available, and so on. Thus, such display is likely to be more and more spread as a display apparatus.

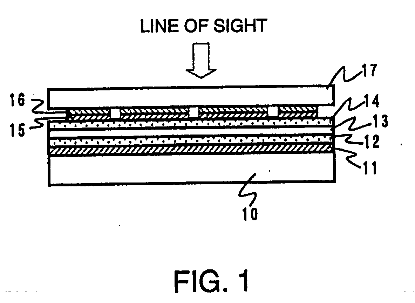

As illustrated in Fig. 1 for example, the inorganic EL display has a structure comprising a rear substrate 10 on which a metal electrode 11, a first dielectric layer 12, an inorganic EL phosphor layer 13, a second dielectric layer 14, an ITO (indium tin oxide) electrode 15, a RGB (red-green-blue) color filter 16, and a front substrate 17 are successively laminated.

In the inorganic EL display having the above-mentioned structure, the metal electrode 11 and the ITO electrode 15 are applied with an electric voltage to excite the inorganic EL phosphor layer 13 so that a light beam is produced. The light beam is subjected to color conversion by the RGB color filter 16.

In recent years, it is attempted to use the inorganic EL display in a home television. For a large-sized display, there is a demand for a substrate having a size on the order of 40-inch to 60-inch models. In case where a small-sized display of a 12-inch or smaller model is produced, the production efficiency is much high if a large substrate is at first prepared and then cut and divided into a plurality of individual substrates, rather than preparing rear substrates one by one. In this respect also, the substrate is desired to be large in size.

In a conventional production process of the inorganic EL display, a dielectric layer or a phosphor layer is formed on the rear substrate in the following manner. The material thereof is applied on the rear substrate by a paste method or the like, dried, and then fired at about 800°C. Therefore, as the rear substrate, use is mainly made of an alumina substrate high in heat resistance.

However, it is very difficult to produce a large-sized substrate from alumina so that the cost is extremely high. Furthermore, such alumina substrate has a high density of about 4g/cm³. This is a large obstacle to the reduction in weight of the inorganic EL display.

Under the circumstances, it is considered to use a glass substrate as the rear substrate. At first, consideration has been made of a soda lime glass used as a front substrate of the inorganic EL display. This glass substrate is characterized by a low cost, formability into a large plate, and a low density. However, the soda lime substrate is low in heat resistance. If it is fired at a high temperature of 800°C, thermal deformation is caused. Therefore, this glass substrate can not be used as the rear substrate.

In recent years, a low firing temperature is sought in order to lower the production cost of the inorganic EL display. At present, development is made of a technique of forming a uniform dielectric layer or a uniform phosphor layer at a temperature on the order of 650-700°C so that a display having a sufficient color purity can be produced. Even under the above-mentioned firing condition, however, thermal deformation also occurs if the soda lime glass substrate is used as the rear substrate.

Therefore, in case where the soda lime glass substrate is used as the rear substrate, the dielectric layer and the phosphor layer must be fired at a temperature not higher than 650°C, i.e., at a temperature such that the glass substrate exhibits no thermal deformation. However, such low-temperature firing fails to provide the uniform dielectric layer or the uniform phosphor layer. As a consequence, the inorganic EL display is remarkably deteriorated in color purity to become unsuitable for use.

Furthermore, the soda lime glass has a volume resistivity (log ρ) as low as 8.4Ω • cm at 150°C so that the mobility of alkali components in the glass is large. If this glass is used as the rear substrate of the inorganic EL display, the alkali components in the glass reacts with the metal electrode to unfavorably change the electric resistance of the electrode material.

It is therefore an object of this invention to provide an inorganic EL display glass substrate which is free from thermal deformation even if it is fired at 650-700°C, which is high in volume resistivity as compared with a soda lime glass substrate, which can be reduced in weight and increased in size, and which is thus suitable as a rear substrate.

Other objects of this invention will become clear as the description proceeds.

### Disclosure of the Invention

As a result of various experiments repeatedly carried out for the purpose of achieving the above-mentioned object, the present inventors have found out that, in order to avoid thermal deformation in a firing step at 650-700°C, a glass must have a strain point not lower than 520°C, and propose this invention.

Specifically, according to this invention, there is provided an inorganic EL display glass substrate comprising an aluminosilicate glass, containing CaO, SrO, BaO, and ZrO₂ the contents of which fall within ranges of, by mass percent, 0-13% CaO, 0-13% SrO, 0-13% BaO, 0-10% ZrO₂, and 0-13% CaO+SrO+BaO+ ZrO₂, and having the strain point not lower than 520°C.

Preferably, the inorganic EL display glass substrate has a coefficient of thermal expansion of 50-100 x 10⁻⁷/°C within a temperature range of 30-380°C.

The inorganic EL display glass substrate according to this invention has the strain point not lower than 520°C (preferably not lower than 550°C, more preferably not lower than 570°C). Therefore, if it is used as a rear substrate and fired at 650-700°C, no thermal deformation is caused. Furthermore, the aluminosilicate glass has a high volume resistivity as compared with a soda lime glass. Therefore, an electric resistance of an electrode material of the inorganic EL display hardly varies.

Generally, an aluminosilicate glass substrate is disadvantageous in that it is easily broken as compared with a soda lime glass substrate. However, it has been found out that CaO, SrO, BaO, and ZrO₂ are components deteriorating a crack-resistant characteristic of the glass. In view of the above, the total content of these components is restricted to 13% or less. Therefore, the inorganic EL display substrate according to this invention is excellent in crack-resistant characteristic and is hardly broken.

In this invention, it is more preferable that the coefficient of thermal expansion of the substrate is 50-100 x 10⁻⁷/°C (preferably 60-90 x 10⁻⁷/°C) within a temperature range of 30-380°C to approximate the coefficient of thermal expansion of a front substrate or a dielectric layer. In this event, thermal stress is not produced between the substrate and the front substrate or the dielectric material.

The glass substrate according to this invention can be formed into a large plate. Therefore, a large-sized display substrate for 40-inch to 60-inch models can be produced at a low cost. Furthermore, it is possible to economically produce a small-sized display substrate of a 12-inch or smaller model by first producing a large plate glass and then cutting and dividing the same into a plurality of individual substrates.

The glass substrate according to this invention can be produced by a well-known sheet glass forming technique, i.e., a float process, a roll-out process, a slot down-draw process, an overflow down-draw process, and so on. According to these method, it is possible to form a large-sized substrate.

Specifically, the inorganic EL display glass substrate has a composition of 45-85% SiO₂, 1-20% Al₂O₃, 0-15% MgO, 0-13% CaO, 0-13% SrO, 0-13% BaO, 0-2% Li₂O, 0-10% Na₂O, 0-20% K₂O, 0-10% ZrO₂, and 0-13% CaO+SrO+BaO+ZrO₂.

In the above-mentioned range, the following two compositions are particularly preferable.

A composition of 45-85% (preferably 50-70%) SiO₂, 1-20% (preferably 1-15%) Al₂O₃, 0-15% (preferably 1-7%) MgO, 0-13% (preferably 1-10%) CaO, 0-13% (preferably 0-8%) SrO, 0-13% (preferably 0-8%) BaO, 0-2% (preferably 0-1%) Li₂O, 0-10% (preferably 0-6%) Na₂O, 0-20% (preferably 4-15%) K₂O, 0-10% (preferably 0-7%) ZrO₂, and 0-13% (preferably 8-12%) CaO+SrO+BaO+ZrO₂.

Alternatively, a composition of 45-85% (preferably 50-70%) SiO₂, 1-20% (preferably 1-15%) Al₂O₃, 0-15% (preferably 1-7%) MgO, 0-6% (preferably 1-5%) CaO, 0-13% (preferably 0-8%) SrO, 0-13% (preferably 0-8%) BaO, 0-2% (preferably 0-1%) Li₂O, 0-10% (preferably 0-6%) Na₂O, 0-20% (preferably 4-15%) K₂O, 0-10% (preferably 0-7%) ZrO₂, and 0-13% (preferably 6-12%) CaO+SrO+BaO+ZrO₂.

The reason why the former composition of the glass is defined as above will be described below.

SiO₂ is a component elevating the strain point of the glass. If the content of SiO₂ is smaller than 45%, the strain point of the glass is lowered so that thermal deformation tends to occur. On the other hand, the content greater than 85% is unfavorable because the coefficient of thermal expansion is excessively small.

Al₂O₃ is also a component elevating the strain point of the glass. If the content of Al₂O₃ is smaller than 1%, the strain point of the glass is lowered so that thermal deformation tends to occur. On the other hand, the content of Al₂O₃ being greater than 20% is unfavorable because the meltability of the glass is decreased.

MgO is a component controlling the coefficient of thermal expansion of the glass and improving the meltability. The content of MgO being greater than 15% is unfavorable because the glass is readily devitrified.

CaO is a component improving the meltability and the volume resistivity of the glass. The content of CaO being greater than 13% is unfavorable because the glass is readily devitrified.

SrO is a component increasing the meltability and the volume resistivity of the glass. The content of SrO being greater than 13% is unfavorable because the density of the glass is increased so that the weight of the substrate is excessively heavy.

Like SrO, BaO is a component increasing the meltability and the volume resistivity of the glass. The content of BaO being greater than 13% is unfavorable because the density of the glass is increased so that the weight of the glass is excessively heavy.

Li₂O is a component controlling the coefficient of thermal expansion of the glass and increasing the meltability. The content of Li₂O being greater than 2% is unfavorable because the strain point of the glass is lowered.

Like Li₂O, Na₂O is a component controlling the coefficient of thermal expansion of the glass and increasing the meltability. The content of Na₂O being greater than 10% is unfavorable because the strain point of the glass is lowered.

Like Li₂O and Na₂O, K₂O is a component controlling the coefficient of thermal expansion of the glass and increasing the meltability. The content of K₂O being greater than 20% is unfavorable because the strain point of the glass is lowered.

However, if the glass contains a large amount of Na₂O and K₂O, alkali ions in the glass are diffused in the dielectric layer or the like during firing to readily cause the deterioration in characteristics. Therefore, the total content of Na₂O and K₂O is desirably suppressed to 20% or less.

ZrO₂ is a component elevating the strain point of the glass. The content of ZrO₂ being greater than 10% is unfavorable because the density of the glass is increased so that the weight of the substrate is increased.

The total content of CaO, SrO, BaO, and ZrO₂ is limited to 7-13%. If the total content of these components is greater than 13%, the crack-resistant characteristic of the glass is remarkably degraded. The content of 7% or less is unfavorable because the strain point of the glass is lowered.

The reason why the latter composition of the glass is defined as above will be described below.

SiO₂ is a component elevating the strain point of the glass. If the content of SiO₂ is smaller than 45%, the strain point of the glass is lowered so that thermal deformation tends to occur. On the other hand, the content greater than 85% is unfavorable because the coefficient of thermal expansion is excessively small.

Al₂O₃ is also a component elevating the strain point of the glass. If the content of Al₂O₃ is smaller than 1%, the strain point of the glass is lowered so that thermal deformation tends to occur. On the other hand, the content of Al₂O₃ being greater than 20% is unfavorable because the meltability of the glass is decreased.

MgO is a component controlling the coefficient of thermal expansion of the glass and improving the meltability. The content of MgO being greater than 15% is unfavorable because the glass is readily devitrified.

CaO is a component improving the meltability and the volume resistivity of the glass. The content of CaO being greater than 6% is unfavorable because the crack-resistant characteristic is decreased.

SrO is a component increasing the meltability and the volume resistivity of the glass. The content of SrO being greater than 13% is unfavorable because the density of the glass is increased so that the weight of the substrate is excessively heavy.

Like SrO, BaO is a component increasing the meltability and the volume resistivity of the glass. The content of BaO being greater than 13% is unfavorable because the density of the glass is increased so that the weight of the glass is excessively heavy.

Li₂O is a component controlling the coefficient of thermal expansion of the glass and increasing the meltability. The content of Li₂O being greater than 2% is unfavorable because the strain point of the glass is lowered.

Like Li₂O, Na₂O is a component controlling the coefficient of thermal expansion of the glass and increasing the meltability. The content of Na₂O being greater than 10% is unfavorable because the strain point of the glass is lowered.

Like Li₂O and Na₂O, K₂O is a component controlling the coefficient of thermal expansion of the glass and increasing the meltability. The content of K₂O being greater than 20% is unfavorable because the strain point of the glass is lowered.

However, if the glass contains a large amount of Na₂O and K₂O, alkali ions in the glass are diffused in the dielectric layer or the like during firing to readily cause the deterioration in characteristics. Therefore, the total content of Na₂O and K₂O is desirably suppressed to 20% or less.

ZrO₂ is a component elevating the strain point of the glass. The content of ZrO₂ being greater than 10% is unfavorable because the density of the glass is increased so that the weight of the substrate is increased.

The total content of CaO, SrO, BaO, ZrO₂ is limited to 13% or less as described above. The total content of these components being greater than 13% is unfavorable because the crack-resistant characteristic of the glass is remarkably degraded.

In this invention, the following components may be added in addition to the above-mentioned components.

In order to improve the crack-resistant characteristic of the glass substrate, P₂O₅ may be added up to 10%, preferably up to 5%. An increase in content of P₂O₅ tends to decrease the volume resistivity of the glass. Therefore, the content is desirably suppressed to 10% or less.

In order to improve the chemical durability of the glass and to prevent coloration of the glass by ultraviolet rays, TiO₂ may be added up to 5%, preferably up to 1%. An increase in content of TiO₂ tends to increase the density of the glass. Therefore, the content is desirably suppressed to 5% or less.

In order to improve the meltability of the glass, B₂O₃ may be added up to 5%, preferably up to 2%. An increase in content of B₂O₃ tends to lower the strain point of the glass. Therefore, the content is desirably suppressed to 5% or less.

A fining agent such as As₂O₃, Sb₂O₃, SO₃, and Cl may be added up to 1% in total. A coloring agent such as Fe₂O₃, CoO, NiO, Cr₂O₃, and CeO₂ may be added up to 1% each. However, in view of the environmental aspect, the addition of hazardous As₂O₃ must be avoided.

In this invention, the density of the glass substrate is preferably as low as possible because the inorganic EL display is reduced in weight. Specifically, the density is desirably not greater than 3.0g/cm³ (preferably not greater than 2.8g/cm³).

### Brief Description of the Drawing

Fig. 1 is a sectional view for describing the structure of an inorganic EL display.

### Best Mode for Embodying the Invention

Now, examples of this invention will be described in detail.

Table 1 and 2 show examples (samples Nos. 1-10) of an inorganic EL display glass substrate of this invention and comparative examples (samples Nos. 11 and 12).

The sample No. 12 as the comparative example is a soda lime glass substrate commercially available as a window panel glass for a building.

**Table 1**

| | Examples | | | | | |
|---|---|---|---|---|---|---|
| | No.1 | No. 2 | No. 3 | No. 4 | No. 5 | No. 6 |
| Composition (mass%) | | | | | | |
| SiO₂ | 63.7 | 63.8 | 67.8 | 67.5 | 63.8 | 62.6 |
| Al₂O₃ | 6.0 | 7.9 | 7.9 | 2.8 | 7.9 | 10.0 |
| MgO | 3.6 | 3.6 | 3.6 | 4.5 | 3.6 | 6.2 |
| CaO | 2.5 | 2.5 | 5.5 | 6.0 | 2.5 | 1.0 |
| SrO | 7.5 | 6.5 | 3.5 | - | - | 6.5 |
| BaO | - | - | - - | 3.1 | 6.5 | - |
| Li₂O | - | - | 0.4 | - | - | - |
| Na₂O | 2.5 | 2.5 | 2.5 | 4.9 | 2.5 | 5.0 |
| K₂O | 12.5 | 12.5 | 7.1 | 7.9 | 12.5 | 8.0 |
| ZrO₂ | 0.5 | 0.5 | 0.5 | 2.1 | 0.5 | 0.5 |
| TiO₂ | - | - | - | - | - | - |
| P₂O₅ | 1.0 | - | 1.0 | 1.0 | - | - |
| SO₃ | 0.2 | 0.2 | 0.2 | 0.2 | 0.2 | 0.2 |
| CaO+SrO+BaO+ZrO₂ | 10.5 | 9.5 | 9.5 | 11.2 | 9.5 | 8.0 |
| strain point (°C) | 578 | 585 | 589 | 558 | 573 | 589 |
| volume resistivity log ρ | 11.3 | 11.2 | 10.7 | 11.2 | 11.2 | 10.6 |
| (Ω • cm) | | | | | | |
| crack resistance (mN) | 1030 | 1500 | 880 | 730 | 2100 | 1500 |
| coefficient of thermal | | | | | | |
| expansion [30-380°C] | 85 | 84 | 71 | 80 | 81 | 79 |
| (x 10⁻⁷/°C) | | | | | | |
| density (g/cm³) | 2.55 | 2.53 | 2.49 | 2.54 | 2.54 | 2.55 |

**Table 2**

| | Examples | | | | | |
|---|---|---|---|---|---|---|
| | No. 7 | No.8 | No.9 | No.10 | No. 11 | No. 12 |
| Composition (mass%) | | | | | | |
| SiO₂ | 68.3 | 67.2 | 67.2 | 62.6 | 57.1 | 73.0 |
| Al₂O₃ | 2.1 | 2.8 | 7.2 | 7.9 | 7.0 | 2.0 |
| MgO | 3.8 | 4.5 | 1.9 | 3.6 | 1.5 | 4.0 |
| CaO | 5.0 | 6.3 | 7.6 | 7.5 | 2.0 | 7.0 |
| SrO | - | - | - | - | 7.0 | - |
| BaO | - | 3.1 | - | - | 8.5 | - |
| Li₂O | 1.0 | - | 1.0 | 0.5 | - | - |
| Na₂O | 3.6 | 4.9 | 2.0 | 1.9 | 4.5 | 13.0 |
| K₂O | 10.0 | 7.9 | 12.3 | 12.8 | 7.5 | 1.0 |
| ZrO₂ | 6.0 | 2.1 | 0.6 | 1.9 | 4.5 | - |
| TiO₂ | - | - | - | - | - | - |
| P₂O₅ | - | 1.0 | - | 1.1 | - | - |
| SO₃ | 0.2 | 0.2 | 0.2 | 0.2 | 0.2 | - |
| CaO+SrO+BaO+ZrO₂ | 11.0 | 11.5 | 8.2 | 9.4 | 22.0 | 7.0 |
| strain point (°C) | 533 | 558 | 535 | 578 | 587 | 500 |
| volume resistivity log ρ | 12.0 | 11.3 | 12.0 | 11.4 | 11.9 | 8.5 |
| (Ω • cm) | | | | | | |
| crack resistance (mN) | 680 | 700 | 880 | 1030 | 490 | 880 |
| coefficient of thermal | | | | | | |
| expansion [30-380°C] | 79 | 81 | 84 | 83 | 82 | 89 |
| (× 10⁻⁷/°C) | | | | | | |
| density (g/cm³) | 2.54 | 2.54 | 2.47 | 2.51 | 2.80 | 2.50 |

Each of the samples Nos. 1-11 in Tables was produced in the following manner.

A glass material batch was prepared to have each glass composition in Tables, melted in a platinum pot at 1550°C for 5 hours, and then poured out onto a carbon plate. Thus, a glass substrate was produced.

Each sample thus obtained was evaluated for various characteristics. The result is shown in Tables.

As is obvious from Tables, each of the samples Nos. 1-10 as examples of this invention has a strain point not lower than 533°C, a volume resistivity not lower than 10.6, and a coefficient of thermal expansion of 71-85 x 10⁻⁷/°C and is thus suitable as a rear substrate of an inorganic EL display. In addition, since the density is not higher than 2.55g/cm⁻³, the weight can be reduced. Furthermore, since each of these samples has a crack resistance as high as 680mN or more, it is assumed that cracks will hardly occur in a production process.

On the other hand, the sample No. 11 as a comparative example has a crack resistance as low as 490mN. It is therefore assumed that cracks will easily occur in a production process.

The sample No. 12 has a low strain point. Therefore, if it is used as a rear substrate of an inorganic EL display and fired at 650-700°C, thermal deformation will occur. Since the volume resistivity is as low as 8.5, it is anticipated that the electric resistance of the electrode material will unfavorably be changed.

The strain point in Tables was measured according to ASTM C336-71. The volume resistivity was measured according to ASTM C657-78 as a value at 150°C.

For the crack-resistant characteristic, use was made of a method proposed by Wada et al (M. Wada et al, Proc., the Xth ICG, vol. 11, Ceram. Soc., Japan, Kyoto, 1974, p.39). In this method, a sample glass is placed on a stage of a Vickers hardness tester. A square pyramid diamond indenter was pressed against the surface of the sample glass for 15 seconds under various loads. Then, the number of cracks produced from four indentation corners within 15 seconds after the removal of the load is counted. As a crack occurrence ratio, the ratio with respect to the number of maximum possible occurrences of cracks (four) is calculated and the ratio with respect to the number of maximum possible occurrences of cracks (four) is calculated. The load when the crack occurrence ratio is equal to 50% is taken as a "crack resistance". The crack resistance being great means that cracks hardly occur even under a high load, i.e., the crack-resistant characteristic is excellent. The measurement of the crack occurrence ratio was carried out 20 times under the same load and the average was calculated. The measurement was carried out under the conditions of the temperature of 25°C and the humidity of 30%.

The coefficient of thermal expansion was measured by the use of a dilatometer as an average coefficient of thermal expansion within a range of 30-380°C. The density was measured by the known Archimedes method.

As described above, the inorganic EL display glass substrate of this invention has a high strain point not lower than 520°C as well as a high volume resistivity and a high crack resistance and is therefore suitable as the rear substrate of the inorganic EL display.

The inorganic EL display glass substrate of this invention has a low density and therefore can be reduced in weight. In addition, since a large-sized substrate can easily be produced, it is possible to produce a large-sized home television of 40-inch to 60-inch models. If it is used in a small-sized display, the productivity is considerably improved.

Furthermore, if the inorganic EL display glass substrate of this invention has a coefficient of thermal expansion of 50-100 x 10⁻⁷/°C within a temperature range of 30-380°C, thermal stress is hardly produced between the glass substrate and the front substrate or the dielectric material.

## Claims

1. An inorganic EL display glass substrate comprising an aluminosilicate glass, containing CaO, SrO, BaO, and ZrO₂ the contents of which fall within ranges of, by mass percent, 0-13% CaO, 0-13% SrO, 0-13% BaO, 0-10% ZrO₂, and 0-13% CaO+SrO+BaO+ZrO₂, and having the strain point not lower than 520°C.

2. An inorganic EL display glass substrate as claimed in claim 1, wherein said substrate has a coefficient of thermal expansion of 50-100 x 10⁻⁷/°C within a temperature range of 30-380°C.

3. An inorganic EL display glass substrate as claimed in claim 1, wherein the contents of CaO, SrO, BaO, and ZrO₂ fall within ranges of, by mass percent, 0-13% CaO, 0-13% SrO, 0-13% BaO, 0-10% ZrO₂, and 7-13% CaO+SrO+BaO+ZrO₂.

4. An inorganic EL display glass substrate as claimed in claim 3, wherein said substrate has a coefficient of thermal expansion of 50-100 x 10⁻⁷/°C within a temperature range of 30-380°C.

5. An inorganic EL display glass substrate as claimed in claim 1, wherein the contents of CaO, SrO, BaO, and ZrO₂ fall within ranges of, by mass percent, 0-6% CaO, 0-13% SrO, 0-13% BaO, 0-10% ZrO₂, and 7-13% CaO+SrO+BaO+ZrO₂.

6. An inorganic EL display glass substrate as claimed in claim 5, wherein said substrate has a coefficient of thermal expansion of 50-100 x 10⁻⁷/°C within a temperature range of 30-380°C.
